# EUROPÄISCHE PATENTANMELDUNG

(11) **EP 1 033 672 A1**
(43) Veröffentlichungstag der Anmeldung: **06.09.2000**
(21) Anmeldenummer: 00890066.4
(22) Anmeldetag: 03.03.2000
(51) Int. Cl.: G06K 19/06

(54) **Verfahren zur maschinenlesbaren Markierung von Stückgut**

(30) Priorität: 04.03.1999 AT 37399; 09.02.2000 AT 892000 U
(71) Anmelder: Numtec-interstahl Beteiligungs und Verwaltungs-GmbH & Co KG, 4844 Regau 106 (AT)
(72) Erfinder: Parzmair, Raimund, 4691 Breitenschützing (AT)
(74) Vertreter: Gibler, Ferdinand, Dipl.Ing. Dr. techn.

(57) **Zusammenfassung**

Verfahren zur maschinenlesbaren Markierung von Stückgut, wobei auf das Stückgut (1) ein Markierungsfeld in Form einer aus einer Vielzahl von Matrixpunkten (20) gebildeten Punktematrix aufgebracht wird, indem die Oberfläche des Stückguts (1) an den Matrixpunkten (20) entsprechend einem vorbestimmbaren Markierungskode jeweils mit aus einer Vertiefung (11) gebildeten Markierung versehen wird oder die Stückgutoberfläche unverändert gelassen wird, wobei die Markierungsvertiefung jeweils durch Ausbilden eines Loches (11) gebildet wird.

## Beschreibung

Die Erfindung betrifft ein Verfahren zur maschinenlesbaren Markierung von Stückgut, wobei auf das Stückgut ein Markierungsfeld in Form einer aus einer Vielzahl von Matrixpunkten gebildeten Punktematrix aufgebracht wird, indem die Oberfläche des Stückguts an den Matrixpunkten entsprechend einem vorbestimmbaren Markierungskode jeweils mit aus einer Vertiefung gebildeten Markierung versehen wird oder die Stückgutoberfläche unverändert gelassen wird.

Besonders in der metallherstellenden und metallverarbeitenden Industrie sind maschinenlesbare Markierungen für einen rationellen Produktionsablauf unverzichtbar. Im wesentlichen geht es darum, das Stückgut so zu kennzeichnen, daß es nach Durchlaufen von einem oder mehreren Bearbeitungsschritten identifiziert und seiner weiteren Bestimmung zugeführt werden kann. Verschiedene Normen, z.B. ISO 900x o.ä. erfordern eine durchgängige Materialrückverfolgbarkeit vom Endprodukt zurück bis auf die Chargennummer bzw. den entsprechenden Knüppel oder die Bramme.

Eine Grundvoraussetzung für ein erfolgreiches Zurückverfolgen der verschiedenen Bearbeitungsvorgänge ist ein zuverlässiges, vollautomatisches Markierungsverfahren.

Das Problem herkömmlicher Markierungsverfahren besteht in der geringen Beständigkeit solcher Markierungen, wenn diese verschiedene Bearbeitungsvorgänge, wie z.B. Glühen, Härten, Walzen o.ä., durchlaufen, wobei Temperaturen über 1000°C auftreten können, die herkömmliche Markierungsarten nicht überdauern. Unter Stückgut werden dabei alle nach einem industriellen Prozeß hergestellte oder verarbeitete Teile oder Gegenstände aus Metall, Kunststoff, Holz, Glas o.ä. Materialen verstanden.

Aufgabe der Erfindung ist es, ein Verfahren zur maschinenlesbaren Markierung von Stückgut anzugeben, welches das Aufbringen einer Markierung ermöglicht, die gegenüber äußeren Einflüssen, insbesondere hohen Temperaturen, beständig und mit geringer Fehlerwahrscheinlichkeit lesbar ist.

Weitere Aufgabe der Erfindung ist es, die rasche und störungsfreie Markierung des Stückguts zu ermöglichen.

Weitere Aufgabe der Erfindung ist es, die Lesbarkeit der Markierung auch während eines Bearbeitungsvorganges zu gewährleisten und einen guten Lesekontrast der Markierung zu ermöglichen.

Erfindungsgemäß wird dies dadurch erreicht, daß die Markierungsvertiefung jeweils durch Ausbilden eines Loches gebildet wird.

Der besondere Vorteil einer Markierung mit Löchern an den Matrixpunkten ergibt sich während der Verarbeitung bei hohen Temperaturen, z.B. nach dem Wiederaufheizen einer Stahlbramme, die zuvor mit einer Punktematrix aus Löchern markiert worden war. Die Stahlbramme wird dabei auf eine so hohe Temperatur erwärmt, daß ihr Inneres hellrot glühend bleibt, während eine äußere sich abkühlende Kruste das glühende Innere zusammenhält. Die bei Umgebungstemperatur relativ niedrigen optischen Kontrast aufweisenden Sacklochbohrungen leuchten nach der Wiederaufheizphase hellrot auf, da der Bohrgrund dem heißen Inhalt näher ist als die diesen umgebende kühle Kruste, welche dunkelrote Farbe aufweist. Dadurch entsteht ein sehr starker Kontrast und die Matrixpunkte können daher über optische Systeme mit hoher Lesesicherheit ausgelesen werden. Es kann daher die Ablesung des Markierungskodes bei hohen Temperaturen ohne zusätzliche Beleuchtung und ohne vorherige Abkühlung der Bramme vorgenommen werden.

Da die Information nur im Vorhandensein einer Markierung oder durch ein Freilassen des Matrixpunktes besteht, ist diese Art der Kodierung weniger störanfällig als z.B. der bekannte Bar-Code, bei welchem genaue Strichstärken und Abstände vermessen werden. Der dabei angewandte Matrix-Code erlaubt es, eine redundante Kodierung vorzunehmen, bei der z.B. bis zu 50% der Matrixpunkte gestört sein können und die Information trotzdem eindeutig und sicher lesbar ist.

In weiterer Ausbildung der Erfindung kann die Markierungsvertiefung jeweils durch Ausbilden eines, vorzugsweise kegelstumpfförmigen, Sackloches gebildet werden.

Der besondere Vorteil von Sacklöchern in Stahlteilen ergibt sich während der Verarbeitung bei hohen Temperaturen, z.B. nach dem Wiederaufheizen einer Stahlbramme, die zuvor mit einer Punktematrix aus Sacklöchem markiert worden war, aufgrund der leuchtenden und gut sichtbaren Punktematrix.

Die der Kodierung dienenden Sacklöcher sollen zur Vermeidung von Verzögerungen üblicherweise möglichst ohne größere Zeitverzögerungen ausgebildet werden. Dabei hat sich herausgestellt, daß aufgrund der oftmals rauhen Oberflächen des Stückgutes es vorteilhaft ist, wenn die Markierungsvertiefungen als kegelstumpfförmige Sacklöcher ausgeführt werden, um das Werkzeug zur Herstellung dieser Löcher zu schonen.

Gemäß einer weiteren Variante der Erfindung können die Markierungsvertiefungen an den Matrixpunkten mittels eines Fließlochformers geformt werden.

Der üblicherweise aus einem Hartmetalldorn gebildete Fließlochformer ermöglicht eine rasche und saubere Ausführung der Markierungsvertiefungen, da diese nur durch Materialverformung und -verdrängung aufgrund der durch den Vorschubdruck entstehenden Reibungshitze gebildet werden und jegliches Entstehen von Bohrspänen dadurch vermieden wird. Auf diese Weise werden die verschiedenen, am zu markierenden Stückgut durchzuführenden Bearbeitungsschritte durch den Markierungsvorgang nicht beeinträchtigt. Auch die Anbringung der Markierungsvertiefungen selbst wird durch Bohrspäne nicht beeinträchtigt. Der Fließlochformer ermöglicht sowohl ein sehr rasches Eindringen in das zu markierende Stückgut als auch ein rasches Austreten aus diesem, ohne daß es zu Behinderungen durch Bohr- bzw. Fräsgraten kommen kann.

Der Vorgang des Fließlochformens ist eine bereits seit einiger Zeit bekannte Technologie, wobei diese Art der Lochausbildung vor allem für das Ausbilden von Buchsen in dünnwandigen, metallischen Werkstoffen angewandt worden ist. Die Verwendung des Fließlochformvorganges zur Herstellung von Markierungs-Vertiefungen, ob Durchgangslöcher oder Sacklochbohrungen, ist bisher noch nicht erfolgt.

Die solcherart vorgenommene Markierung ermöglicht eine Bearbeitung des Stückgutes, z.B. bei hohen Temperaturen, unter hohem Walzdruck o.ä., ohne daß dadurch die nach dem erfindungsgemäßen Verfahren aufgebrachte Markierung ihre Lesbarkeit verliert. Jeder Matrixpunkt repräsentiert einen Informationsgehalt von 1 Bit, wobei einer Vertiefung der Wert 1 und einer unveränderten Stückgutoberfläche der Wert 0 zugeordnet werden kann.

Da eine kegelstumpfförmige Ausbildung des Fließlochformers eine sehr kurze Formzeit der Vertiefung ermöglicht, ist diese Form des Sackloches für das erfindungsgemäße Verfahren besonders geeignet.

Gemäß einer weiteren Ausführungsform der Erfindung kann das Verhältnis des Durchmessers und der Tiefe der Markierungsvertiefungen ungefähr im Bereich zwischen 0,5 und 1 liegen.

Die dabei im Stückgut ausgebildeten Markierungsvertiefungen können bei einer solchen Dimensionierung die am Stückgut vorzunehmenden Bearbeitungsschritte unbeschädigt überstehen, sodaß sie danach von einer Kode-Lesevorrichtung noch einwandfrei gelesen werden können und der Kode dekodiert werden kann. Der gegenseitige Abstand der Löcher ist dabei so zu wählen, daß nach einer formgebenden Bearbeitung des Stückgutes die Matrixpunkte ohne Fehler identifizierbar sind.

Gemäß einem weiteren Ausführungsbeispiel der Erfindung können die Matrixpunkte der Punktematrix in gleich beabstandeten, parallelen Reihen und gleich beabstandeten, parallelen Spalten angeordnet werden.

Dadurch ergibt sich eine einfache und einheitliche Anordnung der Punktematrix, sodaß die Kode-Lesevorrichtung entsprechend einfach aufgebaut werden kann.

Wird eine zusätzliche Information hinsichtlich der Orientierung des zu markierenden Stückgutes innerhalb der Kodierung angestrebt, so kann gemäß einer weiteren Variante der Erfindung vorgesehen sein, daß zumindest eine Reihe oder zumindest eine Spalte der Punktematrix in einem größeren Abstand zur restlichen Matrix angeordnet wird.

Die dadurch entstehende Asymmetrie innerhalb der Kodierung kann für die Detektion der richtigen Ausrichtung des Stückgutes herangezogen werden.

Für schmales Stückgut, wie z.B. Rohre o.ä. kann eine entsprechend platzsparende Kodierung gewählt werden, indem gemäß einer Weiterbildung der Erfindung die Punktematrix nur aus einer Zeile bzw. einer Spalte gebildet wird.

In weiterer Ausbildung der Erfindung kann die Anzahl der in der Punktematrix beinhalteten Matrixpunkte entsprechend dem zu kodierenden Informationsgehalt gewählt werden.

Das Markierungsfeld kann demnach immer den aktuellen Informationsanforderungen angepaßt werden, sodaß immer die kleinstmögliche Punktematrix verwendet wird, um unnötige Markierungsvorgänge einzusparen.

Ein Teil der Matrixpunkte kann einem Fehlersicherungs- und -korrekturkode vorbehalten sein, mit dem überprüfbar ist, ob die Markierung des Stückgutes den jeweiligen Bearbeitungsvorgang fehlerfrei überstanden hat. Bei aufgetretenen Fehlern kann der richtige Kode zurückgerechnet werden.

In bevorzugter Weise kann das Stückgut aus Metallbrammen gebildet sein und die Punktematrix an einer der Stirnflächen der Metallbrammen angebracht werden. Damit können bei einer Serienfertigung verschiedene Metallbrammen unterschieden werden, wobei die Kode-Lesevorrichtung an einem festen Ort der Produktionsanlage angebracht ist und der Markierungskode während des Vorbeibewegens des Stückgutes gelesen werden kann, sodaß eine entsprechende Zuordnung des identifizierten Stückgutes zu einem für ihn vorbestimmten Produktionsweg vorgenommen werden kann. Das Anbringen des Kodes an der Stirnseite des Stückgutes ist deshalb von Vorteil, weil in den meisten Fällen keine Bearbeitung der Stirnseite sondern nur der Längsseiten des Stückgutes vorgenommen wird und die Sichtbarkeit des Kodes damit auch während eines Walzvorganges erhalten werden kann.

Gemäß einer Weiterbildung der Erfindung können die Markierungsvertiefungen mit einem mehrere, unabhängig voneinander betätigbare Spindeln aufweisenden Mehrspindelkopf vorgenommen werden.

Das Lesen und Wandeln der Kodes kann auch über Handlesegeräte vorgenommen werden, was besonders im Lagerbetrieb sehr vorteilhaft ist, da die Vorgeschichte des gelagerten Stückgutes durch die Kodierung zurückverfolgt werden kann, der Lagerarbeiter dabei aber mit einem tragbaren Gerät jedes einzelne gelagerte Teil überprüfen kann, ohne das Stückgut zu einer stationären Lesevorrichtung transportieren zu müssen.

Die Erfindung wird anhand der in den beigeschlossenen Zeichnungen dargestellten Ausführungsbeispiele eingehend erläutert. Es zeigt dabei
Fig.1 eine teilweise Draufsicht auf ein nach dem erfindungsgemäßen Verfahren markiertes Stückgut;
Fig.2 eine seitliche Ansicht von zwei erfindungsgemäß markierten Stückgutteilen;
Fig.3 einen Schnitt durch eine Markierungsvertiefung und einen Fließlochformer;
Fig.4 ein unter Anwendung des erfindungsgemäßen Verfahrens hergestelltes Markierungsfeld;
Fig.5 eine Stirnansicht einer Vorrichtung zur Durchführung des erfindungsgemäßen Verfahrens;
Fig.6 eine Seitenansicht der Vorrichtung nach Fig.5 und
Fig.7 ein Detail einer Mehrspindel-Bohrmaschine.

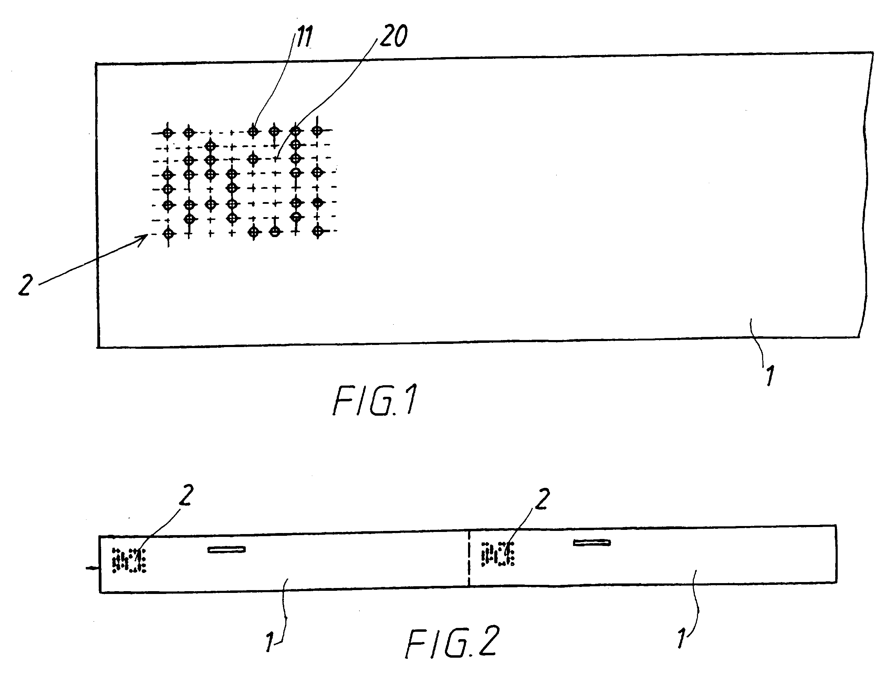

Fig.1 zeigt ein Stückgutteil 1, welches mit einem Verfahren zur maschinenlesbaren Markierung von Stückgut markiert worden ist.

Zu diesem Zweck wird auf das Stückgut 1 ein Markierungsfeld 2 in Form einer aus einer Vielzahl von Matrixpunkten 20 gebildeten Punktematrix aufgebracht, indem die Oberfläche des Stückguts 1 an den Matrixpunkten 20 entsprechend einem vorbestimmbaren Markierungskode jeweils mit aus einer Vertiefung 11 gebildeten Markierung versehen wird oder die Stückgutoberfläche unverändert gelassen wird.

Erfindungsgemäß ist vorgesehen, daß die Markierungsvertiefung jeweils durch Ausbilden eines Loches 11 gebildet wird. Die Matrix aus Markierungsvertiefungen 11 wird in bevorzugter Weise mittels eines Fließlochformers geformt.

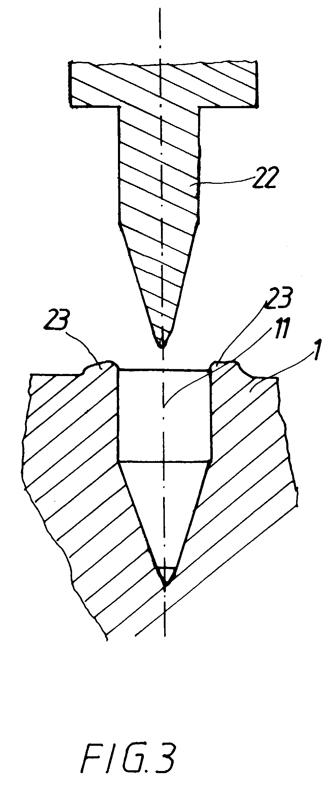

Fig.3 zeigt eine Ausführungsform eines Fließlochformers 22 und eine erfindungsgemäß ausgebildete Markierung 11 im Detail. Im Gegensatz zu einer gewöhnlichen Bohrung wird bei der Herstellung eines Fließloches das Material nicht durch spanabhebendes Eindringen weggehobelt, sondern durch Vorschubdruck und dabei entstehende Reibungshitze verdrängt, wobei um die Eintrittsstelle des Fließlochformers 22 eine wulstförmige Erhebung 23 aufgeworfen wird. Der Fließlochformer 22 ist ein aus Hartmetall gebildeter Dorn 22, der einen konischen Endteil und einen zylindrischen Teil aufweist, der in einen zylindrischen Schaftteil zum Einspannen des Fließlochformers 22 in ein Bohrfutter übergeht.

Das konische Ende und der daran anschließende Zylinderteil bilden die wirksamen Teile des Fließlochformers 22 bei der Formung der Markierungsvertiefung 11.

Aufgrund dieser Formgestaltung des Fließlochformers 22 hat es sich als vorteilhaft herausgestellt, daß die Markierungsvertiefungen als kegelstumpfförmige Sacklöcher 11 ausgeführt werden.

Die Sacklöcher liefern bei hohen Temperaturen einen sehr gut erkennbaren Kontrast und ermöglichen eine besonders sichere Kodeerkennung.

Es kann die Form der Markierungsvertiefung aber im Rahmen der Erfindung auch anders gewählt werden. Dementsprechend ist die Form des Fließlochformers anzupassen.

Die Fließlochtechnik ermöglicht eine sehr rasche und saubere Ausbildung von Durchgangs- aber auch von Sacklochbohrungen, wobei keine störenden Bohrspäne auftreten, die beim Anbringen der Markierungsvertiefungen oder bei weiteren Bearbeitungsschritten am Stückgut hinderlich wären.

Für Rohre oder sonstige schmale Stückgutteile ist es vorzuziehen, wenn die Punktematrix nur aus einer Zeile bzw. einer Spalte besteht, die z.B. in Längsrichtung des Rohres aufgebracht wird.

Das Verhältnis des Durchmessers und der Tiefe der Markierungsvertiefungen 11 liegt in bevorzugter Weise ungefähr im Bereich zwischen 0,5 und 1. So konnte eine gute Lesbarkeit der Kodierung bei Fließlöchern beispielsweise mit einem Durchmesser von 4 bis 10 mm und einer Tiefe von 5 bis 10 mm festgestellt werden.

Bei der Kodierung entsteht das in Fig.gezeigte Markierungsfeld 2, welches an manchen der Matrixpunkte 20 Löcher bzw. Bohrungen 11 und an den restlichen Matrixpunkten 20 keine Löcher bzw. Bohrungen aufweist. Damit ist jeder Matrixpunkt als digitaler Wert in Form von logisch 1 (Bohrung) und logisch 0 (keine Bohrung) kodierbar. Der auf diese Art am Stückgut anbringbare Kode kann auf vielfache Weise zur Markierung genützt werden.

Ein dafür verwendbare Datenkode ist z.B.der von AIM INTERNATIONAL als public domain-Kode freigegebene Data Matrix Code, welcher über Internet abrufbar ist (www.aimi.org). Dieser Kode enthält Fehlererkennung und Fehlerkorrektur.

Über eine solche Kodierung können die Stücknummer, der Bestimmungsort, der Herstellungsursprung, die anzuwendenden Prozesse oder ähnliche Informationen in praktisch unzerstörbarer Weise auf dem Stückgut aufgebracht und an geeigneter Stelle von einer Kode-Lesevorrichtung, z.B. einer Videokamera, einer CCD-Einheit, einer Laser-Lichtabtastung, bei der die Bohrtiefe festgestellt wird, o.ä., gelesen und dekodiert werden.

Lesevorrichtungen können entweder als stationäre Systeme oder Handlesegeräte ausgebildet sein.

Stationäre Systeme bestehen grundsätzlich aus einer CCD-Kamera mit Optik, z.B. Zoom-Objektiv, einer Auswerteeinheit mit Rechner, einer Anzeige und Datenübertragungsmodulen, die Schnittstellen wie RS232, RS485, Ethernet usw. beinhalten. Zur Kontraststeigerung und zur Erhöhung der Lesezuverlässigkeit kann bei diesen Geräten eine spezielle Beleuchtung mit einem oder mehreren Schweinwerfern vorgesehen sein, die durch geeignete schräge Beleuchtung der Markierungsbohrungen deren Sichtbarkeit deutlich erhöhen.

Handlesegeräte beinhalten auch ein CCD-Kamera, eine Auswerteeinheit, einen Scheinwerfer und eine Anzeigeeinheit, die Datenübertragung zu einer zentralen Stelle geschieht jedoch über Funk oder Infrarot.

Die zusammen mit den Lesegeräten angewandte Software beinhaltet die Fähigkeit zum Erlernen von Zeichen, die der Punktematrix entsprechen, wobei über ein Korrelationsverfahren das gelesene Zeichen mit eingelernten Bildern verglichen wird. Das gelesene Zeichen wird segmentiert, wobei Kratzer oder andere Störungen innerhalb der Punktematrix beseitigt werden.

Zweckmäßig für eine technisch einfach realisierbare Art der Kodierung ist es, wie in Fig. 1 gezeigt, die Matrixpunkte 20 der Punktematrix in gleich beabstandeten, parallelen Reihen und gleich beabstandeten, parallelen Spalten anzuordnen, wobei die Punktematrix im Ausführungsbeispiel gemäß Fig. 1 aus acht Reihen und acht Spalten gebildet ist. Die Anzahl der Reihen und Spalten ist im Rahmen der Erfindung frei wählbar. Die Matrix kann aber auch in unregelmäßiger Form auf dem Stückgut aufgebracht sein.

Um eine eindeutige Definition der Ausrichtung der Punkte-Matrix gegenüber den Stückgutkanten vorzunehmen, kann vorgesehen sein, daß zumindest eine Reihe oder zumindest eine Spalte der Punktematrix in einem größeren Abstand zur restlichen Matrix angeordnet wird.

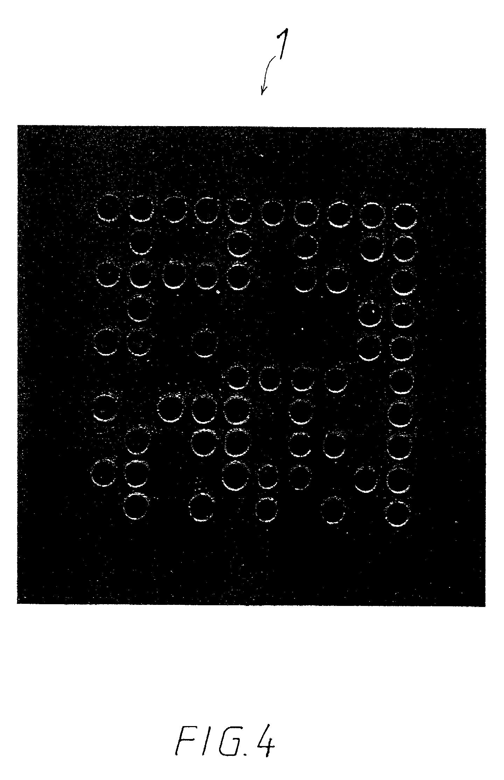

Für Metallbrammen ist es vorteilhaft, die Punktematrix an einer Stirnfläche anzubringen, weil dort keine Oberflächenbehandlung zu erwarten ist. Da eine Beschneidung oder Bearbeitung der Stirnflächen üblicherweise erst nach Durchlaufen aller Bearbeitungsvorgänge geschieht, bleibt der Kode bis dahin - ohne weitere Störungen der zu bearbeitenden Flächen zu verursachen - bestehen (Fig.4). Wie vorstehend erwähnt, kann das erfindungsgemäße Verfahren für die Markierung jeder beliebigen Art von Stückgut angewandt werden.

Genauso kann das Markierungsfeld 2 aber auch an einem anderen Bereich der Metallbrammen 1 angebracht sein, etwa an einer Längsseite, wie es in Fig.2 gezeigt ist. Somit kann in einem bestimmten Abstand von einer Endkante die kodierte Information aufgebracht sein, sodaß die Kode-Lesevorrichtung auf einer Produktions- oder Fördereinrichtung in passender Weise anzuordnen ist.

Der gegenseitige Abstand der Matrixpunkte, die Lochtiefe und andere Parameter sind je nach Art des Produktionsverfahrens frei gestaltbar. Auch die Auflösung der Kode-Lesevorrichtung spielt bei der Wahl dieser Parameter eine Rolle. Um Fehlersicherheit und Fehlerkorrektur zu gewährleisten, müssen der Abstand der Matrixpunkte und die Dimensionen der Bohrungen so gewählt werden, daß nach produktionsbedingten Verformungen infolge von Temperatur- oder Druckeinwirkung die Matrixinformation dennoch innerhalb bestimmter Toleranzbereiche bestehen bleiben wird, um sie einlesen zu können.

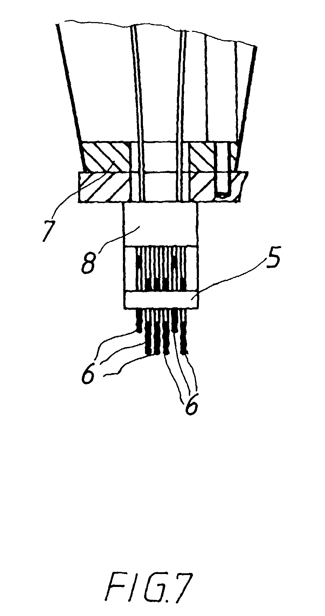

Auf sehr effiziente Weise kann die Ausbildung des Markierungsfeldes 2 vorgenommen werden, indem an den Matrixpunkten 20 entsprechend dem Markierungskode Markierungsvertiefungen mit einem mehrere, unabhängig voneinander betätigbare Spindeln 6 aufweisenden Mehrspindelkopf 7, 8 vorgenommen werden, wie er in Fig.7 abgebildet ist. Mehrere Spindeln 6 mit Fließlochformern oder Bohrern sind dabei gleich beabstandet in einem Lagerbalken 5 nebeneinander angeordnet und unabhängig voneinander bewegbar. Damit kann jeweils eine Reihe oder eine Spalte einer Punktematrix geformt bzw. gebohrt werden. Nach einer Vorschubbewegung kann nachfolgend die nächste Reihe oder Spalte mit den entsprechenden Bohrungen ausgeführt werden.

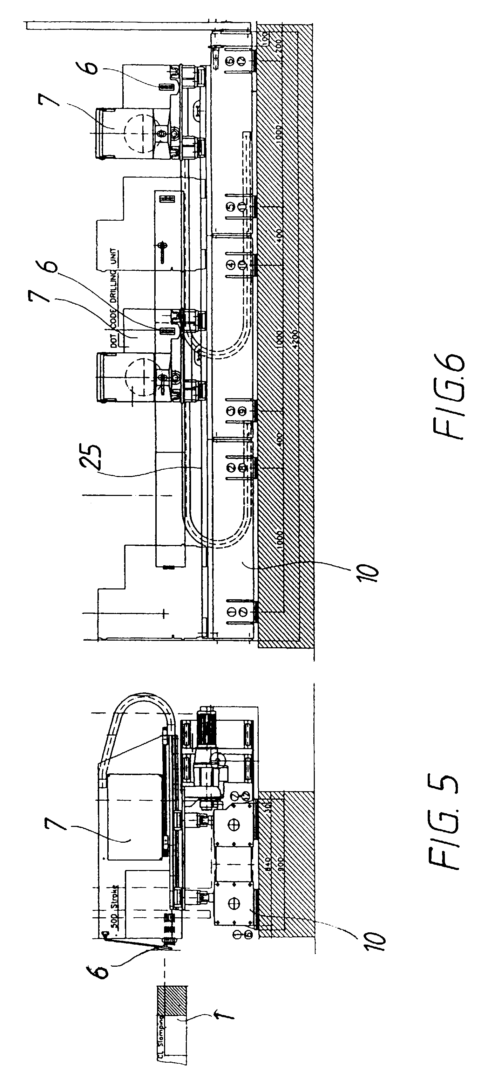

Fig.5 und 6 zeigen eine Anlage mit zwei Mehrspindelköpfen 7, die auf einer Schiene 25 eines Maschinenrahmens 10 unabhängig quer verfahrbar angeordnet sind und die für die serienmäßige Anwendung des erfindungsgemäßen Verfahrens von Stückgut 1 ausgelegt sind. Das mit Hilfe dieser Anlage stirnseitig markierte Stückgut (Fig.5) durchläuft weitere nicht dargestellte Prozesse und ist ständig anhand des mit Hilfe der Spindeln 6 aufgebrachten Markierungsfeldes identifizierbar. Durch Vorsehen von zwei unabhängig verfahrbaren Mehrspindelköpfen 7 kann Stückgut unterschiedlicher Breite markiert werden.

## Patentansprüche

1. Verfahren zur maschinenlesbaren Markierung von Stückgut, wobei auf das Stückgut ein Markierungsfeld in Form einer aus einer Vielzahl von Matrixpunkten gebildeten Punktematrix aufgebracht wird, indem die Oberfläche des Stückguts an den Matrixpunkten entsprechend einem vorbestimmbaren Markierungskode jeweils mit aus einer Vertiefung gebildeten Markierung versehen wird oder die Stückgutoberfläche unverändert gelassen wird, **dadurch gekennzeichnet**, daß die Markierungsvertiefung jeweils durch Ausbilden eines Loches (11) gebildet wird.

2. Verfahren nach Anspruch 1, **dadurch gekennzeichnet**, daß die Markierungsvertiefung jeweils durch Ausbilden eines, vorzugsweise kegelstumpfförmigen, Sackloches (11) gebildet wird.

3. Verfahren nach Anspruch 1 oder 2, **dadurch gekennzeichnet**, daß die Markierungsvertiefungen (11) an den Matrixpunkten (20) mittels eines Fließlochformers geformt werden.

4. Verfahren nach Anspruch 1, 2 oder 3, **dadurch gekennzeichnet**, daß das Verhältnis des Durchmessers und der Tiefe der Markierungsvertiefungen (11) ungefähr im Bereich zwischen 0,5 und 1 liegt.

5. Verfahren nach einem der Ansprüche 1 bis 4, **dadurch gekennzeichnet**, daß die Matrixpunkte (20) der Punktematrix in gleich beabstandeten, parallelen Reihen und gleich beabstandeten, parallelen Spalten angeordnet werden.

6. Verfahren nach Anspruch 5, **dadurch gekennzeichnet**, daß die Punktematrix nur aus einer Zeile bzw. einer Spalte gebildet wird.

7. Verfahren nach Anspruch 6, **dadurch gekennzeichnet**, daß zumindest eine Reihe oder zumindest eine Spalte der Punktematrix in einem größeren Abstand zur restlichen Matrix angeordnet wird.

8. Verfahren nach Anspruch einem der Ansprüche 1 bis 7, **dadurch gekennzeichnet**, daß die Anzahl der in der Punktematrix beinhalteten Matrixpunkte entsprechend dem zu kodierenden Informationsgehalt gewählt wird.

9. Verfahren nach einem der Ansprüche 1 bis 8, **dadurch gekennzeichnet**, daß das Stückgut aus Metallbrammen gebildet ist, und die Punktematrix an einer der Stirnflächen der Metallbrammen angebracht wird.

10. Verfahren nach einem der vorhergehenden Ansprüche, **dadurch gekennzeichnet**, daß die Markierungsvertiefungen mit einem mehrere, unabhängig voneinander betätigbare Spindeln aufweisenden Mehrspindelkopf für Fließlochformer vorgenommen werden.
